# EUROPÄISCHE PATENTSCHRIFT

(11) **EP 2 284 452 B1**
(45) Veröffentlichungstag und Bekanntmachung des Hinweises auf die Patenterteilung: **08.10.2014**
(21) Anmeldenummer: 09010393.8
(22) Anmeldetag: 12.08.2009
(51) Int. Cl.: F24J 2/20, F24J 2/46, H02S 40/44

(54) **Solarabsorber und modulares System**
Solar absorber and modular system
Absorbeur solaire et système modulaire

(43) Veröffentlichungstag der Anmeldung: 16.02.2011
(73) Patentinhaber: Roth Werke GmbH, 35232 Dautphetal (DE)
(72) Erfinder:
(74) Vertreter: Rohmann, Michael

(56) Entgegenhaltungen:
- EP-A2- 1 455 147
- DE-A1- 2 712 387
- DE-A1- 4 120 943
- JP-A- 58 064 458
- US-A- 4 397 305

## Beschreibung

Die Erfindung betrifft einen Solarabsorber mit einer oberseitigen Absorberwandung und einer unterseitigen Absorberwandung, wobei zwischen der oberseitigen Absorberwandung und der unterseitigen Absorberwandung zumindest ein Durchströmungszwischenraum für ein Wärmeträgermedium vorhanden ist. Mit einem solchen Solarabsorber wird aus Sonnenenergie thermische Energie bzw. Wärmeenergie erzeugt. Dazu wird das den Solarabsorber durchströmende Wärmeträgermedium durch die Sonneneinstrahlung erwärmt.

Beispielsweise offenbart die DE 2712387 A einen Sonnenkollektor, mit einem plattenförmigen Blasformteil aus Kunststoff, wobei an den Rand des plattenförmigen Blasformteil ein mit dem Blasformteil einstückiger hohlen Rahmen eingeformt ist, der einen geschlossenen Querschnitt hat.

Solarabsorber der eingangs beschriebenen Art sind aus der Praxis in verschiedenen Ausführungsformen bekannt. Viele dieser bekannten Solarabsorber bestehen aus Metall bzw. die Komponenten dieser Solarabsorber bestehen aus Metall bzw. im Wesentlichen aus Metall. Solarabsorber werden in der Regel auf Dächern u. dgl. montiert und sind deshalb normalerweise wechselnden und/oder extremen Wetter- bzw. Witterungsverhältnissen ausgesetzt. Im Hinblick darauf lassen viele bekannte Solarabsorber bezüglich ihrer Stabilität bzw. Festigkeit und bezüglich ihrer langfristigen funktionssicheren Fixierung an einem Untergrund zu wünschen übrig. Viele bekannte Solarabsorber weisen fernerhin eine nicht befriedigende Wärmedämmung bzw. Wärmeisolierung gegen Wärmeverluste auf. Außerdem lässt die Effizienz bzw. der Wirkungsgrad vieler bekannter Absorber zu wünschen übrig. Bei den bekannten Solarabsorbern geht eine Verbesserung einer der vorgenannten Eigenschaften häufig zu Lasten einer anderen bzw. der anderen Eigenschaften.

Demgegenüber liegt der Erfindung das technische Problem zugrunde, einen Solarabsorber der eingangs genannten Art anzugeben, der mit einfachen Maßnahmen kostengünstig herstellbar ist und bei dem die vorstehend beschriebenen nachteilhaften Eigenschaften möglichst vermieden werden.

Zur Lösung dieses technischen Problems lehrt die Erfindung einen Solarabsorber mit einer oberseitigen Absorberwandung und einer unterseitigen Absorberwandung, wobei zwischen der oberseitigen Absorberwandung und der unterseitigen Absorberwandung ein Durchströmungszwischenraum bzw. zumindest ein Durchströmungszwischenraum für ein Wärmeträgermedium vorhanden ist,

wobei am Rand des Solarabsorbers bzw. am Rand der oberseitigen Absorberwandung und der unterseitigen Absorberwandung ein Hohlprofil vorgesehen ist, das über den Umfang des Solarabsorbers umläuft bzw. im Wesentlichen über den Umfang des Solarabsorbers umläuft,

wobei das Hohlprofil lediglich quer zur unterseitigen Absorberwandung über die unterseitige Absorberwandung vorsteht

und wobei die oberseitige Absorberwandung, die unterseitige Absorberwandung und das Hohlprofil einstückig aus Kunststoff bzw. aus einem Kunststoff gebildet sind. Erfindungsgemäß weist der Solarabsorber also ein einstückig angeformtes Hohlprofil auf.

Der Begriff oberseitig bezieht sich hier und nachfolgend auf die von der Sonneneinstrahlung beaufschlagte Oberfläche des Solarabsorbers. Der Begriff unterseitig bezieht sich dementsprechend hier und nachfolgend auf die der Sonnenbestrahlung abgewandte Unterseite des Solarabsorbers. Dass das Hohlprofil quer zur unterseitigen Absorberwandung über die unterseitige Absorberwandung vorsteht, meint dementsprechend insbesondere, dass das Hohlprofil senkrecht bzw. im Wesentlichen senkrecht zur unterseitigen Absorberwandung über die Oberfläche der unterseitigen Absorberwandung vorsteht.

Der Durchströmungszwischenraum wird nach einer bevorzugten Ausführungsform der Erfindung von einer Mehrzahl bzw. Vielzahl von Durchströmungskanälen gebildet, die zweckmäßigerweise parallel bzw. im Wesentlichen parallel zueinander angeordnet sind. Gemäß einer anderen Ausführungsform der Erfindung ist aber auch eine ganzflächige Durchströmung des Solarabsorbers mit dem Wärmeträgermedium möglich. Zweckmäßigerweise handelt es sich bei dem Wärmeträgermedium um ein flüssiges Wärmeträgermedium und nach einer bevorzugten Ausführungsform besteht das flüssige Wärmeträgermedium aus Wasser bzw. im Wesentlichen aus Wasser. Das Wärmeträgermedium durchströmt den Durchströmungszwischenraum bzw. die Durchströmungkanäle des Solarabsorbers. Hierzu ist der Durchströmungszwischenraum bzw. hierzu sind die Durchströmungskanäle zweckmäßigerweise mit einem geeigneten Verteiler und mit einem geeigneten Sammler verbunden. Vorzugsweise ist der Sammler in den erfindungsgemäßen Solarabsorber integriert.

Gemäß einer empfohlenen Ausführungsvariante kann der erfindungsgemäße Solarabsorber mit einer Photovoltaikeinrichtung bzw. mit Photovoltaikelementen kombiniert werden. Der Solarabsorber entspricht dann einem kombinierten Solarkollektor zur Gewinnung von thermischer und elektrischer Energie. Das wird weiter unten noch näher erläutert.

Es liegt im Rahmen der Erfindung, dass das Aggregat aus oberseitiger Absorberwandung, unterseitiger Absorberwandung und Hohlprofil in einem diskontinuierlichen Extrusionsverfahren, im Pressverfahren oder im Tiefziehverfahren hergestellt ist. Diskontinuierliches Extrusionsverfahren meint insbesondere ein Blasformverfahren oder ein Spritzgussverfahren. Bevorzugt ist dabei die Herstellung des Solarabsorbers mit dem Blasformverfahren.

Bei dem Kunststoff des Solarabsorbers handelt es sich zweckmäßigerweise um ein Polyolefin und vorzugsweise um Polypropylen, Vorzugsweise enthält der Kunststoff des Solarabsorbers Additive, die das Absorptionsvermögen steigern und/oder die zur UV-Stabilisierung beitragen und/oder die die mechanische Festigkeit erhöhen. Empfohlenermaßen wird für den Solarabsorber ein schwarz eingefärbter Kunststoff verwendet. Nach bewährter Ausführungsform enthält der Kunststoff 0,5 bis 4 Gew.%, vorzugsweise 0,7 bis 3 Gew.% und bevorzugt 1 bis 2 Gew.% Ruß, Dieser Zusatz trägt zur Absorptionssteigerung und zur UV-Stabilisierung bei. Grundsätzlich liegt es im Rahmen der Erfindung, dem Kunststoff des Solarabsorbers Additive zur thermischen und/oder mechanischen Stabilisierung und/oder zur Erhöhung der Wärmeleitfähigkeit zuzusetzen. Nach einer Ausführungsvariante wird der Kunststoff des Solarabsorbers durch Zusatz von Fasern verstärkt, beispielsweise durch Zusatz von Zellulosefasern.

Empfohlenermaßen weist die oberseitige Absorberwandung und die unterseitige Absorberwandung und die Wandung des Hohlprofils eine Wandstärke von 0,5 bis 4 mm, vorzugsweise von 1 bis 3 mm und bevorzugt von 2 bis 3 mm auf. Erfindungsgemäß handelt es sich bei dem einstückig angeformten Hohlprofil um ein über den Umfang des Solarabsorbers umlaufendes Hohlprofil. Das Hohlprofil bildet also gleichsam einen Rahmen für den Solarabsorber. Dass das Hohlprofil über den Umfang des Solarabsorbers umläuft meint insbesondere, dass das Hohlprofil unterbrechungsfrei bzw. im Wesentlichen unterbrechungsfrei über den Umfang des Solarabsorbers umläuft. Grundsätzlich liegt es im Rahmen der Erfindung, dass kleinere Unterbrechungen in dem umlaufenden Hohlprofil möglich sind. Vorzugsweise ist das Hohlprofil zumindest bezüglich der seine Längsachse L umgebenden Seitenwandungen geschlossen bzw. im Wesentlichen geschlossen ausgebildet. Es liegt im Rahmen der Erfindung, dass kleinere Öffnungen in dem Hohlprofil möglich sind. Nach einer Ausführungsvariante ist das Hohlprofil vollständig bzw. im Wesentlichen vollständig geschlossen ausgebildet.

Empfohlenermaßen ist das Hohlprofil über den gesamten Umfang des Solarabsorbers bzw. im Wesentlichen über den gesamten Umfang des Solarabsorbers hohl bzw. im Wesentlichen hohl ausgebildet. Zweckmäßigerweise ist das Hohlprofil lediglich mit Luft ausgefüllt. Es liegt im Rahmen der Erfindung, dass das Hohlprofil bezüglich fluider Medien durchströmungsfrei ausgebildet ist. Durchströmungsfrei meint dabei, dass keine gezielte Durchströmung mit einem fluiden Medium, insbesondere mit einem flüssigen Medium realisiert wird. Das bedeutet, dass insbesondere eine zufällige Luftströmung aufgrund von Temperaturgradienten o. dgl. zugelassen sein kann. Empfohlenermaßen ist das Hohlprofil bzw. der hohle Innenraum des Hohlprofils von dem Durchströmungszwischenraum des Solarabsorbers getrennt. Der Erfindung liegt die Erkenntnis zugrunde, dass das erfindungsgemäß einstückig angeformte Hohlprofil eine effektive seitliche Barriere bzw. Isolierung gegen Wärmeverluste für den Solarabsorber darstellt. Zusätzlich trägt das erfindungsgemäße Hohlprofil wirksam zur Stabilisierung des gesamten Solarabsorbers bei.

Nach besonders bevorzugter Ausführungsform der Erfindung ist der größte Innendurchmesser I des Hohlprofils größer als der größte Abstand A zwischen der oberseitigen und der unterseitigen Absorberwandung im Bereich des zumindest einen Durchströmungszwischenraumes. Vorzugsweise ist der größte Innendurchmesser I des Hohlprofils doppelt so groß, bevorzugt dreimal so groß und sehr bevorzugt viermal so groß wie der größte Abstand A zwischen der oberseitigen und der unterseitigen Absorberwandung im Bereich des zumindest einen Durchströmungszwischenraumes. Zweckmäßigerweise weist das Hohlprofil quer zur Längserstreckung des Hohlprofils einen größeren Innenquerschnitt auf als die vorzugsweise im Solarabsorber realisierten Durchströmungskanäle. Zweckmäßigerweise ist der Querschnitt bzw. Innenquerschnitt des Hohlprofils rechteckförmig ausgebildet. Dabei können die Ecken des Rechteckes abgerundet sein.

Eine besonders bewährte Ausführungsform der Erfindung ist **dadurch gekennzeichnet, dass** das Hohlprofil zumindest ein Fixierungselement für die Fixierung des Solarabsorbers aufweist. Die Fixierung des Solarabsorbers mit dem zumindest einem Fixierungselement erfolgt insbesondere an einem Dach bzw. einem Gebäudedach. Nach einer Ausführungsvariante ist ein Fixierungselement als Fixierungsbohrung in dem Hohlprofil ausgebildet. Der Erfindung liegt die Erkenntnis zugrunde, dass mit dem erfindungsgemäßen angeformten Hohlprofil eine besonders funktionssichere Fixierung des Solarabsorbers möglich ist. - Es ist noch darauf hinzuweisen, dass das erfindungsgemäße angeformte Hohlprofil insbesondere auch Anschlüsse für Rohrleitungen o. dgl. aufnehmen kann.

Es empfiehlt sich, dass das Hohlprofil um mindestens die maximale Dicke d des Aggregates aus oberseitiger Absorberwandung und unterseitiger Absorberwandung, vorzugsweise um mindestens das 1,5-fache der maximalen Dicke d, bevorzugt um mindestens das 2-fache der maximalen Dicke d und bevorzugt um mindestens das 2,5-fache der maximalen Dicke d über die unterseitige Absorberwandung vorsteht. Die maximale Dicke d des Aggregates aus oberseitiger Absorberwandung und unterseitiger Absorberwandung entspricht insbesondere der Dicke d im Bereich eines Durchströmungszwischenraumes. Die Länge I des vorstehenden Hohlprofilabschnittes wird dabei von der untersten Oberfläche der unterseitigen Absorberwandung aus gemessen. Nach der vorstehend erläuterten bevorzugten Ausführungsform bildet das über den Umfang des Solarabsorbers umlaufende Hohlprofil eine unterseitige Aufnahmewanne bzw. eine nach unten hin offene Aufnahmewanne.

Eine empfohlene Ausführungsform ist **dadurch gekennzeichnet, dass** zwischen den über die unterseitige Absorberwandung vorstehenden Hohlprofilabschnitten Wärmedämmmaterial bzw. eine Schicht aus Wärmedämmmaterial aufgenommen ist. Das Wärmedämmmaterial ist dabei also in der durch die vorstehenden Hohlprofilabschnitte gebildeten Aufnahmewanne aufgenommen. Bei dieser Ausführungsform wird eine effektive rückseitige Wärmedämmung des Solarabsorbers realisiert, mit der insbesondere Konvektionsverluste reduziert werden können. Diese Ausführungsform mit dem in der Aufnahmewanne aufgenommenen Wärmedämmmaterial eignet sich insbesondere für den Einsatz des Solarabsorbers zur Brauchwassererwärmung und/oder zur Heizungsunterstützung. Empfohlenermaßen liegt das Wärmedämmmaterial oberseitig an der unterseitigen Absorberwandung an und seitlich an den über die unterseitige Absorberwandung überstehenden Hohlprofilabschnitten an. Zweckmäßigerweise fluchtet die Unterseite des Wärmedämmmaterials mit der Unterseite der vorstehenden Hohlprofilabschnitte. Es empfiehlt sich, dass an der Unterseite des Wärmedämmmaterials bzw. an der Unterseite der Schicht aus dem Wärmedämmmaterial und an der Unterseite der vorstehenden Hohlprofilabschnitte eine Abdeckplatte aufliegt. Es hat sich bewährt, dass auch diese Abdeckplatte aus Kunststoff besteht.

Es liegt im Rahmen der Erfindung, dass über der oberseitigen Absorberwandung eine transparente Abdeckscheibe angeordnet ist, die die oberseitige Absorberwandung zweckmäßigerweise vollständig bzw. im Wesentlichen vollständig abdeckt. Wenn der Solarabsorber ausschließlich zur Erzeugung von thermischer Energie eingesetzt wird, handelt es sich bei der transparenten Abdeckscheibe vorzugsweise um eine Abdeckscheibe aus Kunststoff.

Bei einer nicht erfindungsgemäßen Ausführungsform Steht das Hohlprofil über die oberseitige Absorberwandung vor und die transparente Abdeckscheibe ist auf der Oberseite des Hohlprofils angeordnet , so dass zwischen der transparenten Abdeckscheibe und der oberseitigen Absorberwandung ein Abstand a vorhanden ist. Der Abstand a beträgt zweckmäßigerweise 5 bis 25 mm, bevorzugt 7 bis 20 mm und sehr bevorzugt 10 bis 15 mm. Gemessen wird dabei von der obersten Oberfläche der oberseitigen Absorberwandung aus. Diese Ausführungsform eignet sich insbesondere für einen Solarabsorber, der lediglich zur Erzeugung von thermischer Energie eingesetzt wird. Die in dem Abstandsspalt zwischen transparenter Abdeckscheibe und oberseitiger Absorberwandung zweckmäßigerweise vorhandene Luftschicht verhindert bzw. reduziert eine Reflexion der einfallenden Sonnenstrahlen und verhindert bzw. reduziert auf diese Weise Wärmeverluste. Die transparente Abdeckscheibe kann plan oder gewölbt ausgebildet sein.

Gemäß einer besonders bevorzugten Ausführungsform der Erfindung sind über der oberseitigen Absorberwandung Photovoltaikelemente angeordnet, so dass neben thermischer Energie zusätzlich auch elektrische Energie erzeugbar ist. Bei den Photovoltaikelementen kann es sich um Solarzellen auf Basis von kristallinem Silizium handeln. Nach einer anderen Ausführungsform bestehen die Photovoltaikelemente aus Dünnschichtelementen auf Basis von amorphem Silizium. Die gewonnene elektrische Energie kann in vorteilhafter Weise im Zusammenhang mit einer Wärmepumpe eingesetzt werden. Ein erfindungsgemäßer kombinierter Solarkollektor aus einem Absorber zur Erzeugung von thermischer Energie und aus Photovoltaikelementen zur Erzeugung von elektrischer Energie bietet in Kombination mit weiteren identischen Solarkollektoren eine optisch bzw. ästhetisch einheitliche Lösung für Gebäudedächer u. dgl. Gemäß einer Ausführungsvariante sind die Photovoltaikelemente an der bzw. in der transparenten Abdeckscheibe vorgesehen. Zweckmäßigerweise sind die Photovoltaikelemente an der Unterseite der transparenten Abdeckscheibe angeordnet. Bei der Ausführungsform mit Photovoltaikelementen handelt es sich bei der transparenten Abdeckscheibe vorzugsweise um eine Glasscheibe.

Eine empfohlene Ausführungsform der Erfindung ist **dadurch gekennzeichnet, dass** die Photovoltaikelemente und/oder die transparente Abdeckscheibe mit den Photovoltaikelementen ohne Abstand zur oberseitigen Absorberwandung auf der oberseitigen Absorberwandung angeordnet sind. Ohne Abstand meint insbesondere, dass kein Luftspalt bzw. kein nennenswerter Luftspalt zwischen den Photovoltaikelementen und/oder zwischen der transparenten Abdeckscheibe und der oberseitigen Absorberwandung vorhanden ist. Zweckmäßigerweise liegen die Photovoltaikelemente und/oder die transparente Abdeckscheibe mit Photovoltaikelementen unmittelbar auf der oberseitigen Absorberwandung auf. Der Erfindung liegt die Erkenntnis zugrunde, dass bei Anordnung der Photovoltaikelemente auf der oberseitigen Absorberwandung die Photovoltaikelemente im Betrieb in vorteilhafter Weise abgekühlt werden. Aufgrund dieses Abkühleffektes kann der Wirkungsgrad bezüglich der Erzeugung der elektrischen Energie überraschend beachtlich erhöht werden.

Die Erfindung betrifft fernerhin ein modulares System mit einem ersten Modul in Form eines Solarabsorbers, insbesondere nach einem der Ansprüche 1 bis 9, einem zweiten Modul in Form einer Schicht aus Wärmedämmmaterial und einem dritten Modul in Form einer transparenten Abdeckscheibe, wobei das erste Modul je nach Bedarf mit dem zweiten Modul und/oder mit dem dritten Modul kombinierbar ist. Es liegt im Rahmen der Erfindung, dass es sich bei dem ersten Modul um einen Solarabsorber handelt, der im Wesentlichen aus oberseitiger und unterseitiger Absorberwandung und aus dem Hohlprofil besteht. Jedenfalls weist das erste Modul (noch) nicht die Schicht aus dem Wärmedämmmaterial und nicht die transparente Abdeckscheibe auf. Das erste Modul in Form des Solarabsorbers ohne Wärmedämmschicht und ohne transparente Abdeckscheibe kann insbesondere zur solarthermischen Erwärmung von Schwimmbadwasser eingesetzt werden. Die Kombination des ersten Moduls (Solarabsorber) mit dem zweiten Modul (Wärmedämmschicht) findet insbesondere Anwendung bei der solarthermischen Erwärmung von Brauchwasser und/oder bei der solarthermischen Heizungsunterstützung. Zweckmäßigerweise kommt hier auch das dritte Modul in Form der transparenten Abdeckscheibe zum Einsatz, die über der oberseitigen Absorberwandung des Solarabsorbers angeordnet wird. Ein viertes Modul kann aus einer Photovoltaikeinrichtung bzw. aus einer Mehrzahl von Photovoltaikelementen bestehen, die in der oben beschriebenen Weise mit den übrigen Modulen kombiniert werden können. Es liegt im Rahmen der Erfindung, dass das vierte Modul als das dritte Modul eingesetzt werden kann. Vor allem der Solarabsorber mit der unterseitigen Aufnahmewanne eignet sich hervorragend als erstes Modul für das modulare System. In die Aufnahmewanne kann bei Bedarf bzw. bei entsprechendem Einsatz des Solarabsorbers problemlos die Schicht aus dem Wärmedämmmaterial eingesetzt werden. Auf diese Weise kann der zunächst insbesondere für die solarthermische Erwärmung von Schwimmbadwasser geeignete Solarabsorber umgerüstet werden auf einen Absorber für die solarthermische Erwärmung von Brauchwasser und/oder für die solarthermische Heizungsunterstützung. Das erfindungsgemäße modulare System kann durch verschiedene Kombinationsmöglichkeiten auf einfache Weise auch an unterschiedliche solare Einstrahlungen angepasst werden.

Der Erfindung liegt die Erkenntnis zugrunde, dass der erfindungsgemäße Solarabsorber auf einfache, wenig aufwändige und kostengünstige Weise hergestellt werden kann und sich nichtsdestoweniger durch beachtliche Vorteile auszeichnet. Zunächst weist der erfindungsgemäße Solarabsorber eine überraschend hohe Stabilität und Festigkeit auf und kann im Übrigen auf einfache Weise langfristig funktionssicher an einem Untergrund, beispielsweise an einem Dach fixiert werden. Fernerhin liegt der Erfindung die Erkenntnis zugrunde, dass durch die erfindungsgemäße Ausgestaltung des Solarabsorbers eine ausgezeichnete Wärmedämmung bzw. Isolierung gegen Wärmeverluste erreicht wird. Außerdem weist der erfindungsgemäße Solarabsorber eine überraschend hohe Effizienz bzw. einen überraschend hohen Wirkungsgrad auf. Das gilt insbesondere auch für die Kombination mit Photovoltaikelementen zur Erzeugung von thermischer Energie einerseits und von elektrischer Energie andererseits. Der erfindungsgemäße Solarabsorber kann in einem modularen System auf einfache und effektive Weise an unterschiedliche Verhältnisse, insbesondere an unterschiedliche Einstrahlungsverhältnisse angepasst werden.

Nachfolgend wird die Erfindung anhand einer lediglich ein Ausführungsbeispiel darstellenden Zeichnung näher erläutert. Es zeigen in schematischer Darstellung:
- Fig. 1: eine Draufsicht auf einen erfindungsgemäßen Solarabsorber,
- Fig. 2: ausschnittsweise einen Querschnitt im Bereich des Hohlprofils des Solarabsorbers,
- Fig. 3: den Gegenstand nach Fig. 2 in einer anderen Ausführungsform,
- Fig. 4: den Gegenstand gemäß Fig. 2 in einer weiteren nicht erfindungsgemäßen Ausführungsform und
- Fig. 5: den Gegenstand nach Fig. 2 in einer zusätzlichen Ausführungsform.

Die Figuren zeigen einen Solarabsorber mit einer oberseitigen Absorberwandung 1 und einer unterseitigen Absorberwandung 2. Zwischen der oberseitigen Absorberwandung 1 und der unterseitigen Absorberwandung 2 sind als Durchströmungskanäle 3 ausgebildete Durchströmungszwischenräume für ein nicht dargestelltes Wärmeträgermedium vorhanden. Bei dem Wärmeträgermedium mag es sich um Wasser handeln. Die Durchströmungskanäle 3 weisen im Ausführungsbeispiel den gleichen Querschnitt auf und sind parallel zueinander angeordnet. Zwischen den Durchströmungskanälen 3 liegen oberseitige Absorberwandung 1 und unterseitige Absorberwandung 2 unmittelbar aufeinander auf und bilden dort durchströmungsfreie Bereiche 4.

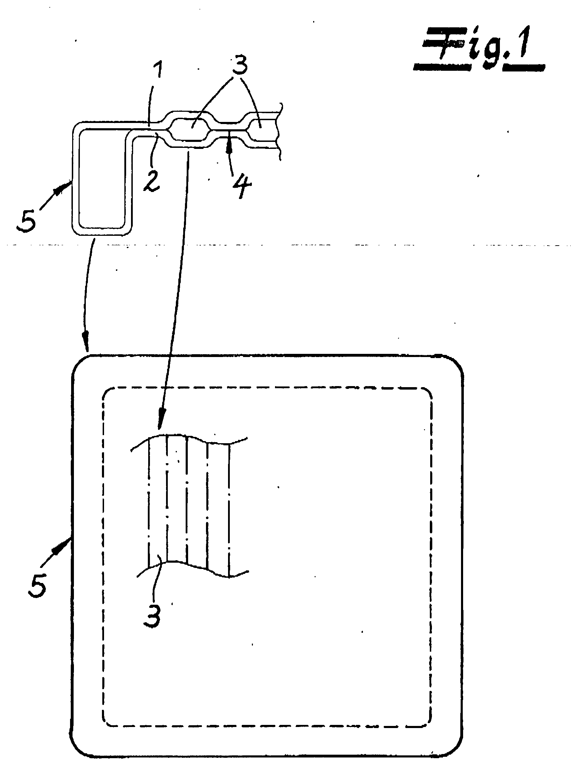

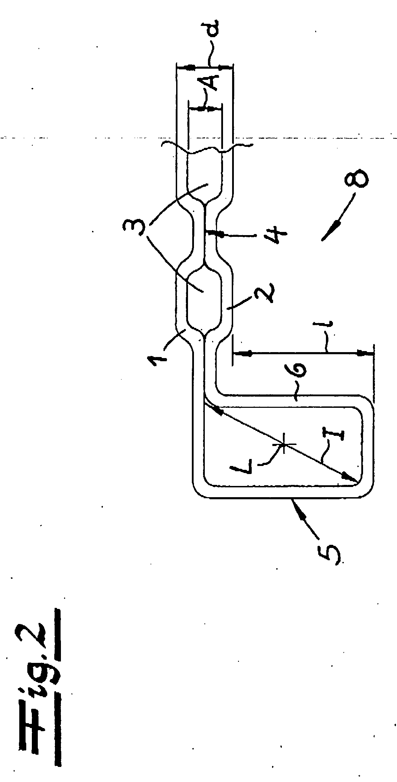

Am Rand des Solarabsorbers ist erfindungsgemäß ein Hohlprofil 5 vorgesehen, das über den Umfang des Solarabsorbers umläuft. Das Hohlprofil 5 bildet gleichsam einen Rahmen für den Solarabsorber. Der Fig. 1 ist entnehmbar, dass das Hohlprofil 5 bzw. der Rahmen unterbrechungsfrei über den Umfang des Solarabsorbers umläuft. In den Fig. 2 bis 5 ist erkennbar, dass das Hohlprofil 5 bezüglich der seine Längsachse L umgebenden Seitenwandungen geschlossen ausgebildet ist.

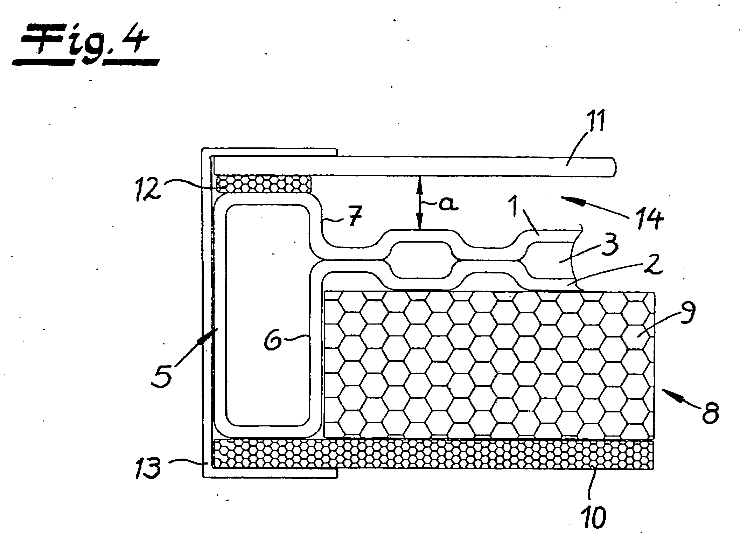

Im Ausführungsbeispiel nach den Fig. 2 bis 5 steht das Hohlprofil 5 quer bzw. senkrecht zur unterseitigen Absorberwandung 2 über die unterseitige Absorberwandung 2 nach unten vor. Die nach unten vorstehenden Hohlprofilabschnitte 6 bilden dabei eine nach unten offene Aufnahmewanne 8. Im Ausführungsbeispiel gemäß Fig. 4 steht das Hohlprofil 5 zusätzlich quer bzw. senkrecht zur oberseitigen Absorberwandung 1 über die oberseitige Absorberwandung 1 nach oben vor. Die nach oben vorstehenden Hohlprofilabschnitte 7 bilden dabei eine nach oben offene Wanne. Erfindungsgemäß ist das Aggregat aus oberseitiger Absorberwandung 1, unterseitiger Absorberwandung 2 und Hohlprofil 5 einstückig aus Kunststoff gebildet. Das Hohlprofil 5 ist im Ausführungsbeispiel einstückig an die oberseitige Absorberwandung 1 und an die unterseitige Absorberwandung 2 angeformt. Vorzugsweise und im Ausführungsbeispiel ist das Aggregat aus oberseitiger Absorberwandung 1, unterseitiger Absorberwandung 2 und Hohlprofil 5 im Blasformverfahren hergestellt. Es liegt im Rahmen der Erfindung, dass der größte Innendurchmesser I des Hohlprofils 5 größer bzw. deutlich größer ist als der größte Abstand A zwischen der oberseitigen Absorberwandung 1 und der unterseitigen Absorberwandung 2 im Bereich eines Durchströmungszwischenraumes bzw. im Bereich eines Durchströmungskanals 3. Vorzugsweise und im Ausführungsbeispiel ist der größte Innendurchmesser I des Hohlprofils 5 mehr als dreimal so groß wie der größte Abstand A. Es liegt fernerhin im Rahmen der Erfindung, dass das Hohlprofil 5 eine größere bzw. eine deutlich größere Innenquerschnittsfläche aufweist als ein Durchströmungskanal 3. Vorzugsweise und im Ausführungsbeispiel ist die Innenquerschnittsfläche des Hohlprofils 5 mehr als doppelt so groß, bevorzugt mehr als dreimal so groß wie die Innenquerschnittsfläche eines Durchströmungskanals 3. Zweckmäßigerweise und im Ausführungsbeispiel ist das Hohlprofil 5 bezüglich fluider Medien durchströmungsfrei ausgebildet und insbesondere von den Durchströmungskanälen 3 getrennt. Das Hohlprofil 5 mag im Ausführungsbeispiel mit Luft ausgefüllt sein.

Empfohlenermaßen und im Ausführungsbeispiel steht das Hohlprofil 5 mit seinen nach unten vorstehenden Hohlprofilabschnitten 6 um mehr als das 1,5-fache der maximalen Dicke d des Aggregates aus oberseitiger Absorberwandung 1 und unterseitiger Absorberwandung 2 über die unterseitige Absorberwandung 2 vor. Gemessen wird dabei von der untersten Oberfläche der unterseitigen Absorberwandung 2 aus. Die entsprechende Länge I der nach unten vorstehenden Hohlprofilabschnitte 6 ist dann also mehr als 1,5 mal so lang, vorzugsweise und im Ausführungsbeispiel mehr als zweimal so lang wie die maximale Dicke d.

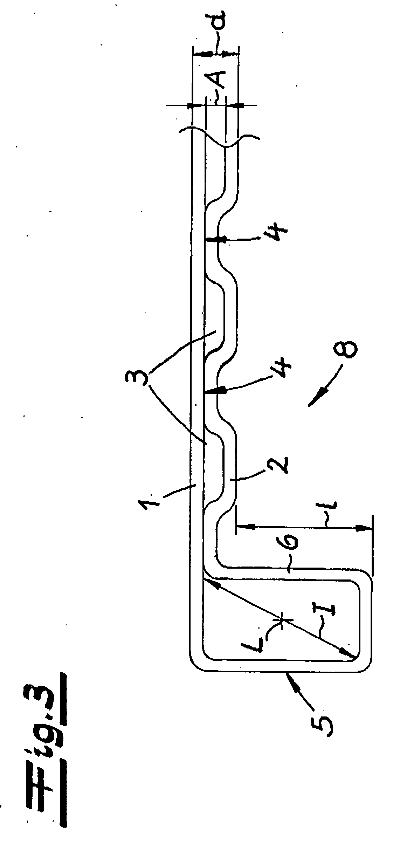

In der Fig. 2 ist im Übrigen im Bereich der Durchströmungskanäle 3 die oberseitige Absorberwandung 1 nach oben gewölbt und die unterseitige Absorberwandung 2 nach unten gewölbt ausgebildet. Dagegen ist im Ausführungsbeispiel nach der Fig. 3 die oberseitige Absorberwandung 1 eben ausgebildet und im Bereich der Durchströmungskanäle 3 lediglich die unterseitige Absorberwandung 2 nach unten gewölbt ausgebildet. Die Ausführungsform gemäß Fig. 3 eignet sich insbesondere für die weiter unten noch beschriebene Auflage bzw. unmittelbare Auflage von Photovoltaikelementen.

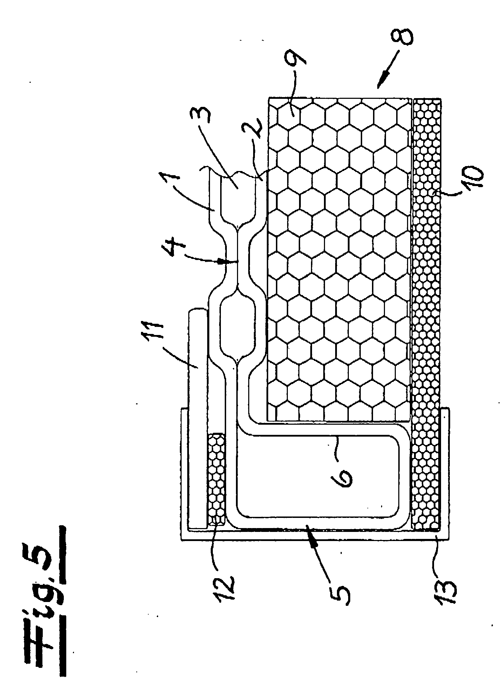

Die Fig. 4 und 5 zeigen Ausführungsformen, bei denen in der von den nach unten vorstehenden Hohlprofilabschnitten 6 gebildeten Aufnahmewanne 8 ein Wärmedämmmaterial bzw. eine Schicht 9 aus Wärmedämmmaterial aufgenommen ist. Die Schicht 9 aus Wärmedämmmaterial ist vorzugsweise und im Ausführungsbeispiel formschlüssig in die Aufnahmewanne 8 eingepasst. Sie bildet eine effektive rückseitige Wärmedämmung für den Solarabsorber. Zweckmäßigerweise und im Ausführungsbeispiel fluchtet die Unterseite der Schicht 9 mit der Unterseite des Hohlprofils 5. Auf die Unterseite der Schicht 9 und die Unterseite des Hohlprofils 5 ist im Ausführungsbeispiel eine wärmedämmende Abdeckplatte 10 aufgebracht. Sie bildet einen kompakten Abschluss des Solarabsorbers und bietet eine zusätzliche effektive Wärmedämmung. Im Ausführungsbeispiel nach den Fig. 4 und 5 ist im Übrigen oberhalb der oberseitigen Absorberwandung 1 eine transparente Abdeckscheibe 11 angeordnet. Die transparente Abdeckscheibe 11 liegt im Ausführungsbeispiel unter Zwischenschaltung eines Abstandselementes 12 auf der Oberseite des Hohlprofils 5 auf. Das Abstandselement 12 besteht vorzugsweise ebenfalls aus einem wärmedämmenden Material. In den Fig. 4 und 5 ist weiterhin erkennbar, dass der Solarabsorber zweckmäßigerweise mittels eines Klammerelementes 13 bzw. mittels Klammerelementen 13 stabilisiert wird. Hier übergreift ein Klammerelement 13 die transparente Abdeckscheibe 11 und es untergreift die Abdeckplatte 10.

Der in Fig. 4 dargestellte Solarabsorber eignet sich insbesondere für die reine bzw. alleinige Erzeugung von thermischer Energie. Hier steht das Hohlprofil 5 quer bzw. senkrecht zur oberseitigen Absorberwandung 1 mit nach oben vorstehenden Hohlprofilabschnitten 7 über die oberseitige Absorberwandung 1 vor. Auf der Oberseite dieser nach oben vorstehenden Hohlprofilabschnitte 7 ist im Ausführungsbeispiel unter Zwischenschaltung des Abstandselementes 12 die transparente Abdeckscheibe 11 aufgelegt. Diese transparente Abdeckscheibe 11 mag im Ausführungsbeispiel nach Fig. 4 insbesondere eine transparente Kunststoffscheibe sein. Durch die Ausgestaltung gemäß Fig. 4 ist zwischen der oberseitigen Absorberwandung 1 und der transparenten Abdeckscheibe 11 ein Abstandsspalt 14 bzw. ein Luftspalt ausgebildet. Die in diesem Abstandsspalt 14 vorhandene Luftschicht verhindert bzw. reduziert effektiv die Reflexion von einfallenden Sonnenstrahlen, so dass Wärmeverluste vermieden werden. Der Abstand a zwischen der oberseitigen Absorberwandung 1 und der transparenten Abdeckscheibe 11 beträgt vorzugsweise 5 bis 20 mm, bevorzugt 8 bis 15 mm. Gemessen wird von der obersten Oberfläche der oberseitigen Absorberwandung 1 aus.

Der in Fig. 5 dargestellte Solarabsorber ist insbesondere als Solarkollektor geeignet, mit dem sowohl thermische Energie als auch elektrische Energie erzeugt werden kann. Bei dieser Ausführungsvariante sind an der Unterseite der transparenten Abdeckscheibe 11 nicht dargestellte Photovoltaikelemente angeordnet. Dabei handelt es sich vorzugsweise um Solarzellen auf Basis von kristallinem Silizium. Aufgrund der Ausgestaltung gemäß Fig. 5 liegt die mit den Photovoltaikelementen bestückte transparente Abdeckscheibe 11 unmittelbar auf der oberseitigen Absorberwandung 1 auf. Durch diese Anordnung ergibt sich ein sehr vorteilhafter Abkühleffekt für die Photovoltaikelemente. Im Ergebnis wird ein ausgezeichneter Wirkungsgrad sowohl bei der Erzeugung der thermischen Energie als auch bei der Erzeugung der elektrischen Energie mittels der Photovoltaikelemente erreicht.

Die in den Fig. 2 und 3 dargestellten Ausführungsformen des Solarabsorbers (ohne Schicht 9 aus Wärmedämmmaterial und ohne transparente Abdeckscheibe 11) eignen sich in der dort dargestellten Form insbesondere für die Erwärmung von Schwimmbadwasser. Die in den Fig. 4 und 5 dargestellten Solarabsorber sind insbesondere für die Brauchwassererwärmung und/oder zur Heizungsunterstützung geeignet.

## Patentansprüche

1. Solarabsorber mit einer oberseitigen Absorberwandung (1) und einer unterseitigen Absorberwandung (2), wobei zwischen der oberseitigen Absorberwandung (1) und der unterseitigen Absorberwandung (2) zumindest ein Durchströmungszwischenraum für ein Wärmeträgermedium vorhanden ist,
wobei am Rand der oberseitigen Absorberwandung (1) und/oder am Rand der unterseitigen Absorberwandung (2) ein Hohlprofil (5) vorgesehen ist, das über den Umfang des Solarabsorbers umläuft bzw. im Wesentlichen über den Umfang des Solarabsorbers umläuft,
wobei die oberseitige Absorberwandung (1), die unterseitige Absorberwandung (2) und das Hohlprofil (5) einstückig aus Kunststoff gebildet sind.
daduch gekennzeichnet, dass
das Hohlprofil (5) lediglich quer zur unterseitigen Absorberwandung (2) über die unterseitige Absorberwandung (2) vorsteht

2. Solarabsorber nach Anspruch 1, wobei das Aggregat aus oberseitiger Absorberwandung (1), unterseitiger Absorberwandung (2) und Hohlprofil (5) in einem diskontinuierlichen Extrusionsverfahren, insbesondere im Blasformverfahren, im Pressverfahren oder im Tiefvehverfahren hergestellt ist.

3. Solarabsorber nach einem der Ansprüche 1 oder 2, wobei der Kunststoff Additive enthält, die das Absorptionsvermögen steigem und/oder die zur UV-Stabilisierung beitragen und/oder die mechanische Festigkeit erhöhen.

4. Solarabsorber nach einem der Ansprüche 1 bis 3, wobei die oberseitige Absorberwandung (1) und/oder die unterseitige Absorberwandung (2) und/oder die Wandung des Hohlprofils (5) eine Wandstärke von 0,5 bis 4 mm, vorzugsweise von 1 bis 3 mm und bevorzugt von 2 bis 3 mm aufweist.

5. Solarabsorber nach einem der Ansprüche 1 bis 4, wobei das Hohlprofil (5) zumindest bezüglich der seine Längsachse L umgebenden Seitenwandungen geschlossen bzw. im Wesentlichen geschlossen ausgebildet ist.

6. Solarabsorber nach einem der Ansprüche 1 bis 5, wobei das Hohlprofil (5) bezüglich fluider Medien durchströmungsfrei ausgebildet ist.

7. Solarabsorber nach einem der Ansprüche 1 bis 6, wobei der größte Innendurchmesser I des Hohlprofils 5 größer ist als der größte Abstand A zwischen der oberseitigen Absorberwandung (1) und der unterseitigen Absorberwandung (2) im Bereich des zumindest einen Durchströmungszwischenraumes.

8. Solarabsorber nach einem der Ansprüche 1 bis 7, wobei das Hohlprofil (5) zumindest ein Fixierungselement für die Fixierung des Solarabsorbers aufweist.

9. Solarabsorber nach einem der Ansprüche 1 bis 8, wobei das Hohlprofil (5) um mindestens die maximale Dicke d des Aggregates aus oberseitiger Absorberwandung (1) und unterseitiger Absorberwandung (2), vorzugsweise um mindestens das 1,5-fache der maximalen Dicke d und bevorzugt um mindestens das 2-fache der maximalen Dicke d über die unterseitige Absorberwandung (2) vorsteht.

10. Solarabsorber nach einem der Ansprüche 1 bis 9, wobei zwischen den über die unterseitige Absorberwandung (2) vorstehenden Hohlprofilabschnitten (6) Wärmedämmmaterial bzw. eine Schicht (9) aus Wärmedämmmaterial aufgenommen ist.

11. Solarabsorber nach einem der Ansprüche 1 bis 10, wobei über der oberseitigen Absorberwandung (1) zumindest eine transparente Abdeckscheibe (11) angeordnet ist, die die oberseitige Absorberwandung (1) zweckmäßigerweise vollständig bzw. im Wesentlichen vollständig abdeckt.

12. Solarabsorber nach einem der Ansprüche 1 bis 11, wobei über der oberseitigen Absorberwandung (1) Photovoltaikelemente angeordnet sind, so dass neben thermischer Energie zusätzlich auch elektrische Energie erzeugbar ist.

13. Solarabsorber nach Anspruch 12, wobei die Photovoltaikelemente ohne Abstand zur oberseitigen Absorberwandung (1) auf der oberseitigen Absorberwandung (1) angeordnet sind.

14. Modulares System mit einem ersten Modul in Form eines Solarabsorbers nach einem der Ansprüche 1 bis 9, einem zweiten Modul in Form einer Schicht (9) aus Wärmedämmmaterial und einem dritten Modul in Form einer transparenten Abdeckscheibe (11), wobei das erste Modul je nach Bedarf mit dem zweiten Modul und/oder mit dem dritten Modul kombinierbar ist.

## Claims

1. A solar absorber with an upper absorber wall (1) and a lower absorber wall (2), wherein at least one flow-through gap for a heat carrier medium is present between the upper absorber wall (1) and lower absorber wall (2),
wherein the edge of the upper absorber wall (1) and/or the edge of the lower absorber wall (2) is provided with a hollow profile (5), which runs around the periphery of the solar absorber or runs essentially around the periphery of the solar absorber,
wherein the upper absorber wall (1), the lower absorber wall (2) and the hollow profile (5) are comprised of a single piece of plastic,
**characterized in that**
the hollow profile (5) projects over the lower absorber wall (2) only transverse to the lower absorber wall (2).

2. The solar absorber according to claim 1, wherein the aggregate comprised of the upper absorber wall (1), lower absorber wall (2) and hollow profile (5) is fabricated in a discontinuous extrusion process, in particular in a blow-molding process, compression molding process or thermoforming process.

3. The solar absorber according to one of claims 1 or 2, wherein the plastic contains additives that increase absorptive capacity and/or facilitate UV stabilization and/or raise mechanical strength.

4. The solar absorber according to one of claims 1 to 3, wherein the upper absorber wall (1) and/or the lower absorber wall (2) and/or the wall of the hollow profile (5) exhibit a wall thickness of 0.5 to 4 mm, advantageously of 1 to 3 mm, and preferably of 2 to 3 mm.

5. The solar absorber according to one of claims 1 to 4, wherein the hollow profile (5) has a closed or essentially closed design at least with respect to the side walls enveloping its longitudinal axis L.

6. The solar absorber according to one of claims 1 to 5, wherein the hollow profile (5) has a flow through-free design with respect to fluid media.

7. The solar absorber according to one of claims 1 to 6, wherein the largest inner diameter I of the hollow profile 5 is larger than the greatest distance A between the upper absorber wall (1) and lower absorber wall (2) in the area of the at least one flow-through gap.

8. The solar absorber according to one of claims 1 to 7, wherein the hollow profile (5) exhibits at least one fixing element to fix the solar absorber in place.

9. The solar absorber according to one of claims 1 to 8, wherein the hollow profile (5) protrudes over the lower absorber wall (2) by at least the maximum thickness d of the aggregate comprised of the upper absorber wall (1) and lower absorber wall (2), advantageously by at least 1.5 times the maximum thickness d, and preferably by at least 2 times the maximum thickness d.

10. The solar absorber according to one of claims 1 to 9, wherein insulation material or a layer (9) comprised of insulation material is accommodated between the hollow profile sections (6) protruding over the lower absorber wall (2).

11. The solar absorber according to one of claims 1 to 10, wherein at least one transparent cover disk (11) is situated over the upper absorber wall (1), and best completely or essentially completely covers the upper absorber wall (1).

12. The solar absorber according to one of claims 1 to 11, wherein photovoltaic elements are arranged over the upper absorber wall (1), so that electrical energy can also be generated apart from thermal energy.

13. The solar absorber according to claim 12, wherein the photovoltaic elements are situated on the upper absorber wall (1) not spaced apart from the upper absorber wall (1).

14. A modular system with a first module in the form of a solar absorber according to one of claims 1 to 9, a second module in the form of a layer (9) comprised of insulation material and a third module in the form of a transparent cover disk (11), wherein the first module can be combined with the second module and/or with the third module, if needed.

## Revendications

1. Absorbeur solaire avec une paroi d'absorbeur supérieure (1) et une paroi d'absorbeur inférieure (2), dans lequel il est prévu au moins une chambre intermédiaire de passage pour un fluide caloporteur entre la paroi d'absorbeur supérieure (1) et la paroi d'absorbeur inférieure (2),
dans lequel il est prévu un profilé creux (5) sur le bord de la paroi d'absorbeur supérieure (1) et/ou sur le bord de la paroi d'absorbeur inférieure (2), lequel s'étend autour de la périphérie de l'absorbeur solaire ou essentiellement autour de la périphérie de l'absorbeur solaire,
dans lequel la paroi d'absorbeur supérieure (1), la paroi d'absorbeur inférieure (2) et le profilé creux (5) sont constitués d'une seule pièce en plastique,
**caractérisé en ce que**
le profilé creux (5) fait saillie au-delà de la paroi d'absorbeur inférieure (2) uniquement perpendiculairement à la paroi d'absorbeur inférieure (2).

2. Absorbeur solaire selon la revendication 1, dans lequel l'agrégat de la paroi d'absorbeur supérieure (1), de la paroi d'absorbeur inférieure (2) et du profilé creux (5) est fabriqué à l'aide d'un procédé d'extrusion discontinu, en particulier un procédé de moulage par soufflage, un procédé de pressage ou un procédé d'emboutissage profond.

3. Absorbeur solaire selon l'une des revendications 1 ou 2, dans lequel le plastique contient des additifs permettant d'augmenter la capacité d'absorption et/ou contribuant à la stabilisation des UV et/ou permettant d'augmenter la résistance mécanique.

4. Absorbeur solaire selon l'une des revendications 1 à 3, dans lequel la paroi d'absorbeur supérieure (1) et/ou la paroi d'absorbeur inférieure (2) et/ou la paroi du profilé creux (5) présentent une épaisseur de paroi de 0,5 à 4 mm, de préférence de 1 à 3 mm et mieux, de 2 à 3 mm.

5. Absorbeur solaire selon l'une des revendications 1 à 4, dans lequel le profilé creux (5) est conçu fermé ou essentiellement fermé, du moins pour ce qui est de ses parois latérales entourant son axe longitudinal L.

6. Absorbeur solaire selon l'une des revendications 1 à 5, dans lequel le profilé creux (5) est conçu de manière à ne pas laisser passer des milieux fluides.

7. Absorbeur solaire selon l'une des revendications 1 à 6, dans lequel le plus grand diamètre intérieur I du profilé creux 5 est supérieur au plus grand espacement A entre la paroi d'absorbeur supérieure (1) et la paroi d'absorbeur inférieure (2) dans la région de l'au moins une chambre intermédiaire de passage.

8. Absorbeur solaire selon l'une des revendications 1 à 7, dans lequel le profilé creux (5) comporte au moins un élément de fixation pour la fixation de l'absorbeur solaire.

9. Absorbeur solaire selon l'une des revendications 1 à 8, dans lequel le profilé creux (5) fait saillie d'au moins l'épaisseur maximale d de l'agrégat de la paroi d'absorbeur supérieure (1) et de la paroi d'absorbeur inférieure (2), de préférence d'au moins 1,5 fois l'épaisseur maximale d et mieux, d'au moins 2 fois l'épaisseur maximale d, au-delà de la paroi d'absorbeur inférieure (2).

10. Absorbeur solaire selon l'une des revendications 1 à 9, dans lequel un matériau d'isolation thermique ou une couche (9) de matériau d'isolation thermique est accueilli(e) entre les sections de profilé creux (6) faisant saillie au-delà de la paroi d'absorbeur inférieure (2).

11. Absorbeur solaire selon l'une des revendications 1 à 10, dans lequel au moins une vitre de recouvrement (11) est agencée au-dessus de la paroi d'absorbeur supérieure (1), laquelle recouvre complètement ou quasiment complètement la paroi d'absorbeur supérieure (1).

12. Absorbeur solaire selon l'une des revendications 1 à 11, dans lequel des éléments photovoltaïques sont agencés au-dessus de la paroi d'absorbeur supérieure (1), de manière à pouvoir également produire de l'énergie électrique en plus de l'énergie thermique.

13. Absorbeur solaire selon la revendication 12, dans lequel les éléments photovoltaïques sont agencés sur la paroi d'absorbeur supérieure (1) sans espacement par rapport à la paroi d'absorbeur supérieure (1).

14. Système modulaire avec un premier module sous la forme d'un absorbeur solaire selon l'une des revendications 1 à 9, un deuxième module sous la forme d'une couche (9) de matériau d'isolation thermique, et un troisième module sous la forme d'une vitre de recouvrement (11) transparente, dans lequel le premier module peut être combiné selon les besoins avec le deuxième module et/ou avec le troisième module.
